# EUROPEAN PATENT APPLICATION

(11) **EP 4 350 165 A1**
(43) Date of publication of application: **10.04.2024**
(21) Application number: 22199603.6
(22) Date of filing: 04.10.2022
(51) Int. Cl.: F16D 65/18, F16D 125/22, F16D 125/12

(54) **PARK BRAKE ACTUATOR**

(71) Applicant: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 80939 München (DE); HÖS, Levente, 1047 Budapest (HU); HOLLOSI, Mate, 1097 Budapest (HU); KLINGNER, Matthias, 82276 Adelshofen (DE); KOKREHEL, Csaba, 1119 Budapest (HU); KRÜGER, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU); KÜHNEMUTH, Gregor, 80339 München (DE)

(57) **Abstract**

The present invention deals with a park brake actuator (P), comprising:
a piston (1) comprising a piston rod (1a) and a piston head (1b), the piston (1) being provided in a housing (3), wherein a spring (2) is arranged between the piston head (1b) and one side of the housing (3),
the housing comprising an opening (3a) in which the piston rod (1a) is movably inserted, a fluid chamber (3b) being provided between the piston head (1b) and the other side of the housing (3), wherein fluid is insertable into the fluid space (3b),
wherein the piston (1) comprises at least one first guiding element (5a) which is adapted to guide the piston rod (1a) in the opening (3a),
and at least one first seal (4a) is provided between the piston rod (1a) and the opening (3a).

## Description

Brake systems for commercial vehicles or utility vehicles typically include a park brake and a service brake. Usually, said park brake and said service brake are arranged in one caliper. Typically, disc brakes are used in commercial or utility vehicles, being actuated via a combined pneumatic cylinder for service- and park brake. Such cylinder has hence two parts, comprising a so-called service brake portion and a park brake portion, being assembled in series and designed to work together. The service brake portion normally actuates a brake under the normal driving conditions, and the park brake portion (e.g. containing a compressed spring in a released state) is used for actuating the brakes when power is removed and the vehicle stands still.

Usually, the park brake portion actuates the service brake portion with the force of a spring when air pressure is released.

For example, a push rod of the park brake portion is connected to a membrane. A spring is designed to actuate the service brake portion, which activates a push rod, which in turn activates an inner mechanics of the brake caliper. When air pressure is being released from the system, the spring of the park brake portion pushes the push rod of the service brake portion for actuation of the brake. An actuation of the brake without the service brake portion is hence not possible.

There is no direct connection of the parking brake portion of the current combined cylinder to the inner mechanics of the brake, rather the parking brake piston needs to be pushed on the service brake piston to transfer the actuation force to the mechanics of the brake.

In solutions according to prior art, a stacking of brake cylinders is needed, and a combined cylinder, comprising a park brake portion and a service brake portion, uses a lot of space.

However, it is also possible to design a separate park brake cylinder, where no service brake cylinder would be included. For passenger cars, a splitting of the brakes has already been performed, wherein separate calipers for the park brake and for the service brake are provided.

In prior art, document DE 2614321 A1 is known. Said document shows a disc brake with an actuating device, which comprises: a force-transmitting part displaceably arranged in the brake caliper and movable in contact with the one brake body, a lever with two cam surfaces arranged at one of its ends, and at least one body that is in rolling contact with the other cam surface and with an opposing surface on the force-transmitting part, so that the force-transmitting part acts on the brake disc, when a drive device acting on the other end of the lever is activated.

When using a park brake only, an installation space in the axial direction can be saved, and a park brake can be integrated in tight spaces more easily. However, due to the introduction of high radial forces into the piston of the park brake actuator, which results of the direct actuation of a push rod which connects to a lever of a caliper, there is a danger that sealings can be worn out very fast and hence would not seal the cylinder anymore.

If a park brake cylinder with a membrane is used, a membrane always leads to a deflection, also in situations when only a linear movement is required. Hence, the membrane must cope with more than one direction of the movement (linear movement and angular deflections), which would lead to fatigue at some point, and hence would reduce the lifetime of the whole brake system, hence also increasing service costs.

Hence, a technical problem of the present application can be seen in providing a separate park brake actuator, being adapted to absorb high radial forces on a piston in order to ensure a long-life sealing ability of the seals of the cylinder.

The technical problem of the present invention is solved by a park brake actuator according to claim 1.

Further advantageous embodiments of the present invention are subject-matter of the dependent claims.

A park brake actuator according to first embodiment comprises a piston, which comprises a piston rod and a piston head, the piston being provided in the housing. A spring is arranged between the piston head and one side of the housing. The housing comprises an opening in which the piston rod is movably inserted. Furthermore, the housing comprises a fluid chamber, being provided between the piston head and the other side of the housing, wherein fluid, e.g. gas, in particular pressurized air, is insertable into the fluid space. The piston comprises at least one first guiding element which is adapted to guide the piston rod in the opening, and at least a first seal, which is provided between the piston rod and the opening.

In this case, the park brake actuator is able to directly actuate the inner mechanics of the park brake, and hence, no combined park brake and service brake cylinder is needed, and hence installation space on the axle can be saved. That leads also to more compact design. The guiding and the sealing of the cylinder are split in the present embodiment, and hence, the piston rod is guided by at least one guiding element in addition to the sealing. This solution enables the piston to always move in a linear direction (without angular or radial deflections), and the sealings can be kept intact over the whole lifetime, although there are increased radial forces in comparison to the conventional park brake chamber in a combined cylinder.

Such design of a park brake cylinder also allows to cope with high-deflection angles between the piston and the lever of the inner mechanics of the brake caliper, compared to the combined service and park brake actuator of the state of the art. Furthermore, new lever designs of the inner mechanics of the brake caliper are enabled. The park brake actuator can be connected directly to a brake caliper, which is intended to only function as a park brake caliper. The additional guiding element is able to cope with high radial forces resulting from a connection of the piston to the inner mechanics of the brake caliper, during actuation and release of the brake.

The at least one seal can be integrally formed with a respective guiding element.

Preferably, the park brake actuator additionally comprises a membrane which is adapted to delimit and seal the fluid chamber from the spring. The spring in this case can push on the elastic membrane, and if air pressure is released from the fluid chamber, the spring pushes the piston. The piston can then undergo a linear motion and forward the movement to a connecting mechanism, which is connected to the lever of the brake caliper. By separating the sealing and the guiding of the piston rod, the guiding and sealing functions will be provided by separated parts, and hence is able to cope with high-guiding forces from a potential connection mechanism.

Furthermore, this embodiment can use the simplified design of a membrane cylinder, and still achieve the compact design and having less installation space.

If no membrane is used, the park brake actuator can comprise a second seal being provided between the piston head and the housing, and a second guiding element provided at the piston head, which is adapted to guide the movement of the piston head in the housing. Hence, it is ensured that only linear movements are performed by the piston head and the piston rod.

The second seal and the second guiding element are optionally integrally formed.

Preferably, the first guiding element and/or the second guiding element are provided as a bushing, preferably a bushing comprising or consisting of polytetrafluoroethylene (PTFE) or a material with similar properties.

Such part is very easy to manufacture and very easy to install on a brake cylinder.

Preferably, no other actuator is connected to the piston. That means that only a park brake function is performed by the park brake actuator, without being connected to a service brake actuator.

Preferably, the park brake actuator comprises at least one connecting element (e.g. provided at the end of the piston, i.e. the end facing away from the piston head). The connecting element is adapted to connect the piston rod with a lever of a park brake caliper, and the lever is adapted to actuate a park brake caliper.

Hence, a linear movement of a piston can be transferred to a circular movement or a pivoting movement of a lever.

Preferably, a transformation of a linear movement with a deflection is performed by the caliper, for example a lever in a clamping unit. In order to make an assembly of the connecting element easier, such connecting element is either attached to the piston of the actuator or to the lever of the brake caliper.

It is important that the connecting element is designed in a way that a free movement is allowed, while keeping the connection in a correct location for assembly of the actuator with the brake caliper.

Preferably, the connecting element is a push rod, preferably provided within a bore of the piston rod. Hence, a linear movement of the push rod is possible, but also a deflection when the piston is actuated or the brake is released. As the push rod is mounted inside the piston, a constant connection is enabled, also when not assembled to the brake caliper.

Preferably, the piston rod comprises a bore with at least one tapered portion, the bore provided at the side opposite to the piston head, and a push rod is arranged in the bore and is adapted to be connected to a lever of a caliper via a ball joint. The tapered bore portion of the piston rod allows greater deflection angles of the push rod during the actuation stroke while at the same time increasing the stiffness and strength of the piston rod. Further, a self-alignment of the push rod is possible.

More preferably, the maximum displacement angle of the push rod within the portion of the bore is between 5° and 20°, even more preferably between 10° and 15°. The maximum displacement angle is the displacement of the push rod, which is guided by the ball joint and the bore.

Preferably, the push rod comprises a ball joint provided within the bore of the piston rod, and the push rod is slideably fixed within the bore by at least one alignment element. Such solution allows a constant and stable connection of the push rod and the piston, while still allowing large deflection angles during actuation and the release of the brake.

The alignment element furthermore helps to provide a direct connection of the push rod to the lever of the inner mechanics of the brake caliper, when mounting the actuator to the caliper. If such alignment element would not be provided, the push rod could wiggle around and could potentially not meet the lever at the correct position during the assembly.

Preferably, the alignment element is a rubber part or alignment spring being adapted for an angular alignment of the push rod, hence allowing a flexible connection.

Alternatively or additionally, the push rod can also be connected to the lever instead of the piston directly, for example via a vulcanized rubber, a pin connection or a magnetic connection.

Such solution is adapted to align the push rod during assembly with the actuator, but still allows the deflection. Such solutions could also be combined with a ball joint connection from the piston to the push rod, as such combination of two connecting mechanisms would allow for easy assembly and service.

Alternatively, the piston rod and the lever of the caliper can be directly connected by a bearing (without a push rod), preferably a roller bearing or a needle bearing. Such solution allows for free movement of the lever, while still only allowing a linear movement of the piston.

Alternatively, the piston rod is connected to the lever and the caliper by a rack provided at the piston and a pinion provided at the lever. In such embodiment, the piston has teeth which interact with the teeth of lever, which also is an easy connection mechanism.

The described solution of a parking brake can be combined with all existent emergency release mechanisms as well as delta pressure compensation solutions (within the spring portion).

In the following, advantageous embodiments of the present application are provided by the attached figures.
- Fig. 1: shows different possibilities for an arrangement of brakes at an axle of a utility vehicle.
- Fig. 2: shows an inner design of a park brake actuator according to a first embodiment of the present invention.
- Fig. 3: shows an arrangement of a membrane within a park brake actuator according to a second embodiment of the present invention.
- Fig. 4a: shows an arrangement of a push rod, connecting a park brake actuator according to a first embodiment of the present invention to further elements of the brake caliper.
- Fig. 4b: shows the arrangement of a push rod in a connection between a park brake actuator and a lever of a park brake caliper.
- Fig. 5: shows three possibilities in order to fix a push rod connecting a park brake actuator according to a first embodiment of the present invention to further elements of the brake caliper in a bore of the piston rod.
- Fig. 6: shows three possibilities of connecting a push rod to a lever of a caliper.
- Fig. 7: shows a direct connection between a push rod and a lever via a bearing.
- Fig. 8: shows a direct connection between a push rod and a lever via a rack and pinion.

- Fig. 9: shows a connection between a park brake actuator according to a first embodiment of the present invention and a lever of a caliper, wherein a piston rod with a tapered bore is used.

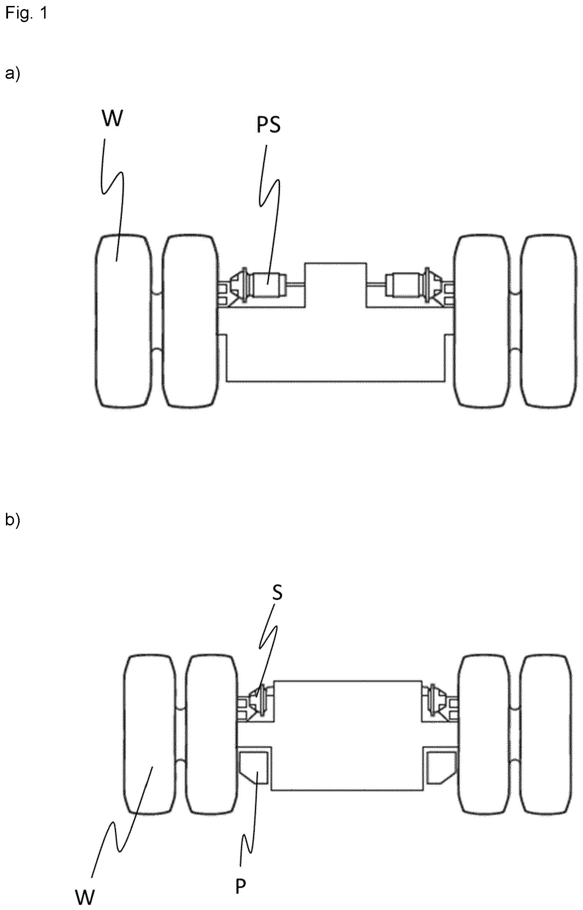

In Fig. 1 a), the arrangement of a combined brake actuator PS at a wheel is shown, such combined actuator PS is used for each wheel. Such combined brake actuator PS is used in the state of the art.

In Fig. 1 b), a service brake actuator S and a park brake actuator P are arranged with radial separation, hence being shorter and consuming less space in the axial direction. The structure of the brake in Fig. 1 b) is according to the present application, where a separate park brake actuator (P) is used.

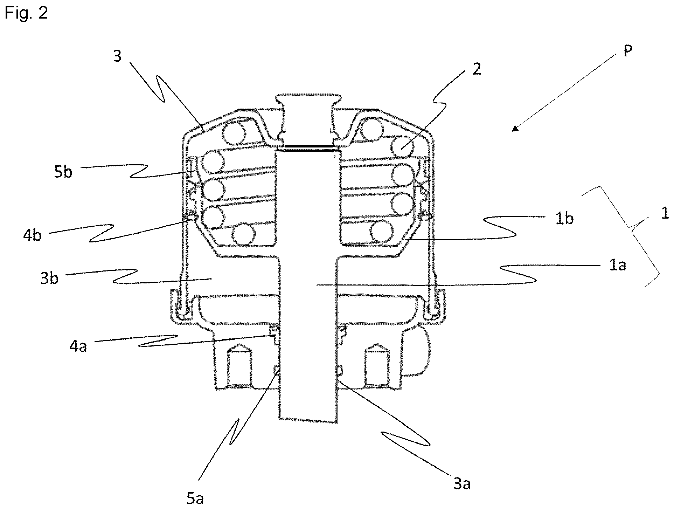

Fig. 2 shows a park brake actuator P according to a first embodiment of the present invention. A piston 1 comprises a piston rod 1a and a piston head 1b. A spring 2 is provided between the piston head 1b and a housing 3, in particular in an upper part of the housing 3. Between the piston head 1b and the lower part of the housing 3, there is a fluid space 3b, into which air, in particular pressurized air, can be inserted and released. Furthermore, there is a bore 3a in the housing, where the piston rod 1a is inserted. Within the opening 3a, a first seal 4a and a first guiding element 5a are provided. The first seal seals a fluid space 3b against the environment. The guiding element 5a guides the piston rod 1a in the opening 3a. Furthermore, there is also a second seal 4b provided between the piston head 1b and the housing 3, and furthermore there is a second guiding element 5b, also provided between the piston head 1b and the housing 3. The guiding elements 5a and 5b ensure the axial movement of the piston 1 within the housing 3. The spring 2 actuates, i.e. pushes, the piston 1 to actuate the brake mechanics. The actuation is done by releasing air pressure from the fluid space 3b. Then, the spring force pushes the piston 1, and the piston 1 is sliding with the help of the guiding elements 4b and 5b and separated seals 4a and 4b in a purely linear motion. The park brake actuator P can be directly mounted to a park brake caliper that is intended to only function as a park brake caliper. In the present figure, the guiding elements 4b and 5b are adapted to cope with high-radial forces (e.g. deflections) resulting from a connection element to a park brake caliper C (not shown here).

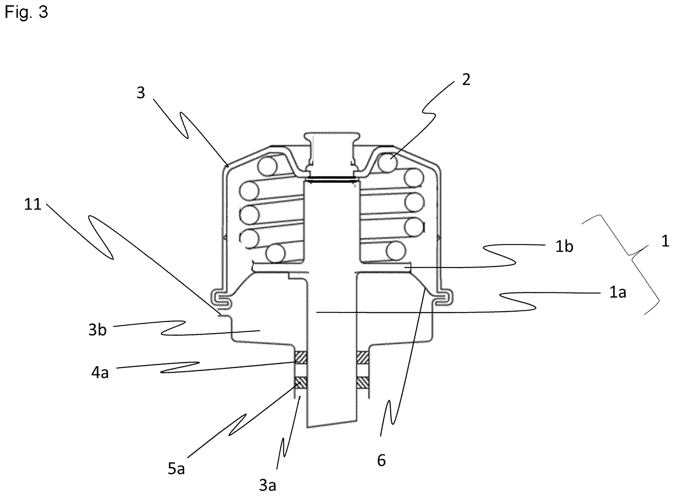

Fig. 3 shows a second embodiment of the present invention: This second embodiment is very similar to the first embodiment, however, a membrane 6 is provided in the lower part of the housing 3. Again, there is a piston rod 1a and a piston head 1b, wherein the membrane is provided below the piston head 1b and is connected to the housing 3. Hence, the fluid space 3b is defined between the lower part of the housing and the membrane 6. In this case, only a first seal 4a and a first guiding element 5a in the opening 3a of the housing 3 are needed. Optionally further guiding elements 4b and 5b can be used at the opening 3a of the housing 3 to avoid a tilting of the piston 1. Also, an air passage 11 is shown in Fig. 3, for inserting compressed air into the fluid space 3b, and to release it.

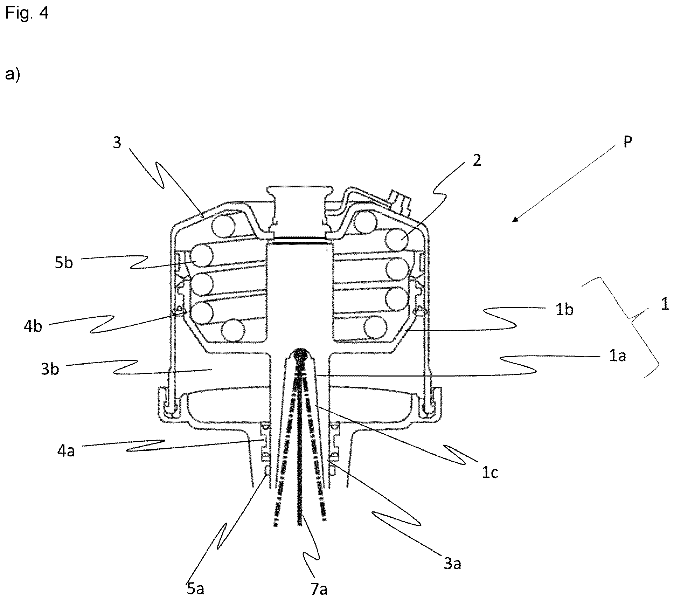

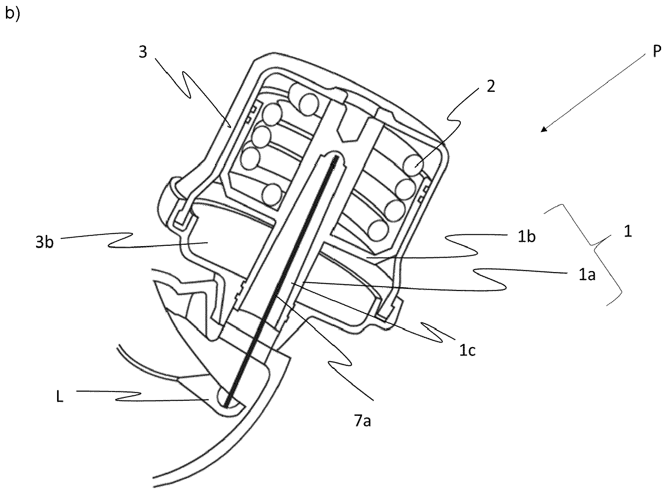

Fig. 4 a) shows a park brake actuator P according to the first embodiment of the present invention, all the parts are about the same as in Fig. 1. However, a bore 1c is provided within the piston 1 (in particular in the piston rod 1a), pointing away from the piston head 1b (i.e. outside of the housing 3). In the bore 1c, a push rod 7a is inserted for connecting to a lever L of a brake caliper C (not shown here). It can be seen that the push rod 7a can deflect during linear movement of the piston 1, and can also move to different directions to a certain extent.

Fig. 4 b) shows a connection of the park brake actuator P to a lever L of a brake caliper C (not shown here) via the push rod 7a.

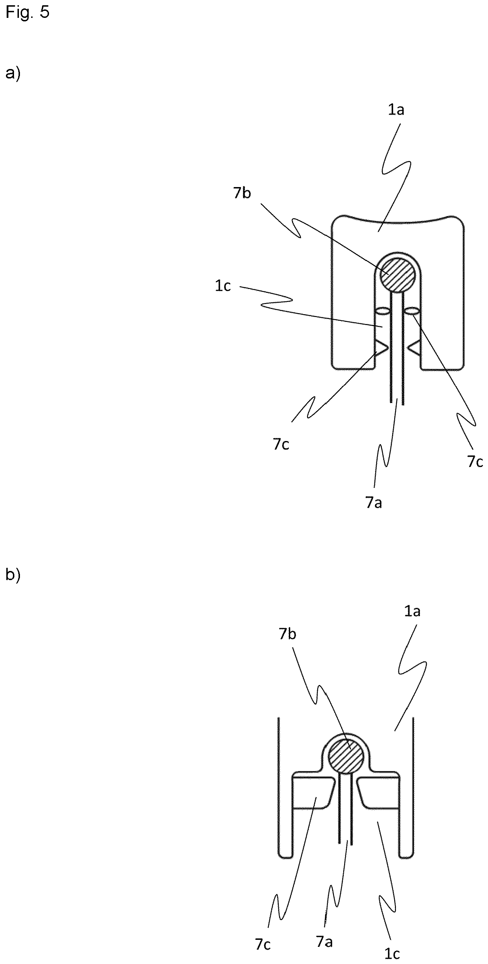

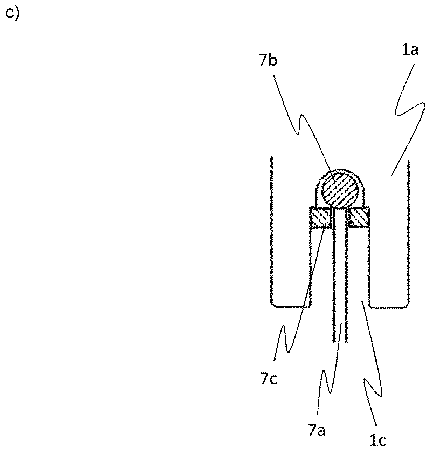

Fig. 5 shows three different connection mechanisms between a bore 1c of a piston rod 1a and a push rod 7a.

In Fig. 5 a), there is a ball joint connection 7b on top of the push rod 7a, wherein there are two pairs of alignment elements 7c arranged within the bore 1c. They restrict the deflection of the push rod 7a.

In Fig. 5 b), there is only one pair of alignment elements 7c, however broader ones (compared to Fig. 5 a)) with a tapered front section. These alignment elements 7c also allow certain deflections of the push rod 7a.

Fig. 5 c) shows a further possibility of alignment elements 7c, however fixing the ball joint 7b in the bore 1c more tightly and rigidly, hence allowing less deflections of the push rod 7a compared to Fig. 5a) and 5b).

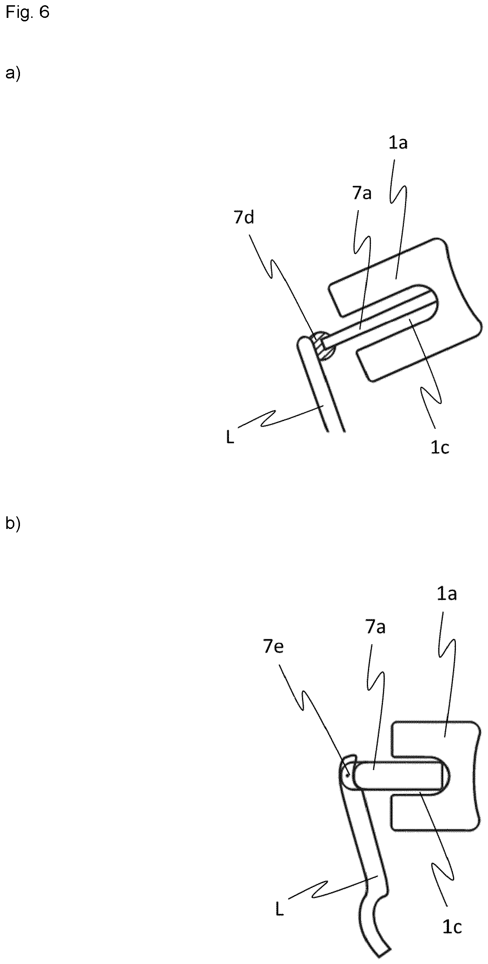

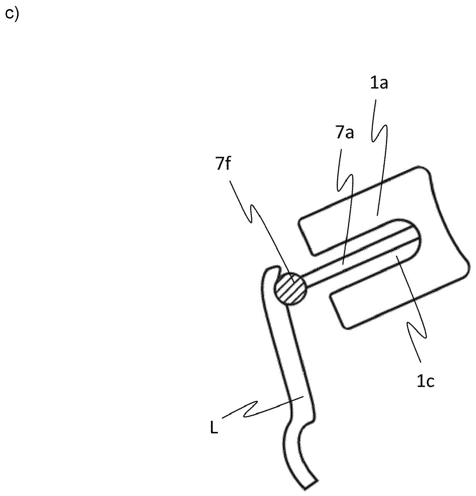

Fig. 6 a) to 6 c) show three possibilities to connect the push rod 7a to a lever L of a park brake caliper C (not shown here) directly.

In Fig. 6 a), there is a connection via of vulcanized rubber 7d, which connects the lever L and the push rod 7a.

In Fig. 6 b), there is a pin connection 7e, wherein a pin is joining the lever L and the push rod 7a.

In Fig. 6 c), there is a magnetic connection 7f between the push rod 7a and the lever L, also allowing a movement of the push rod 7a and the lever L.

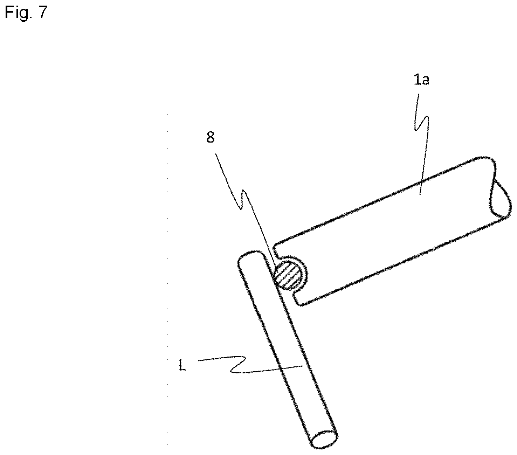

In Fig. 7, a direct connection between the piston 1a and a lever L of a park brake caliper C (not shown here) is provided via a bearing 8. The bearing 8 is preferably provided as a roller bearing or needle bearing, both allowing a rotational movement of the lever, while still only allowing a mainly linear movement of the piston 1a.

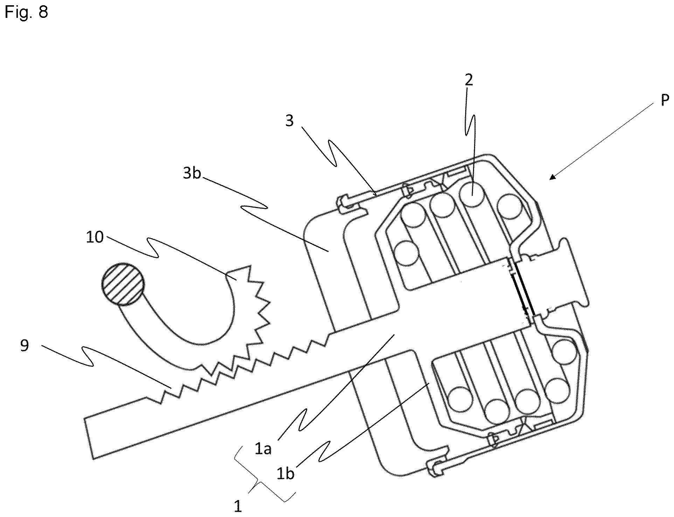

Fig. 8 shows another possibility of a connection of the piston rod 1a of the park brake actuator P to a park brake caliper C (not shown here). In this case, a rack 9 is provided on the piston 1a, and a pinion 10 is provided at the lever L (not shown in this presentation). Also in this case, a linear movement of the piston 1 can be converted in an angular movement of a lever L.

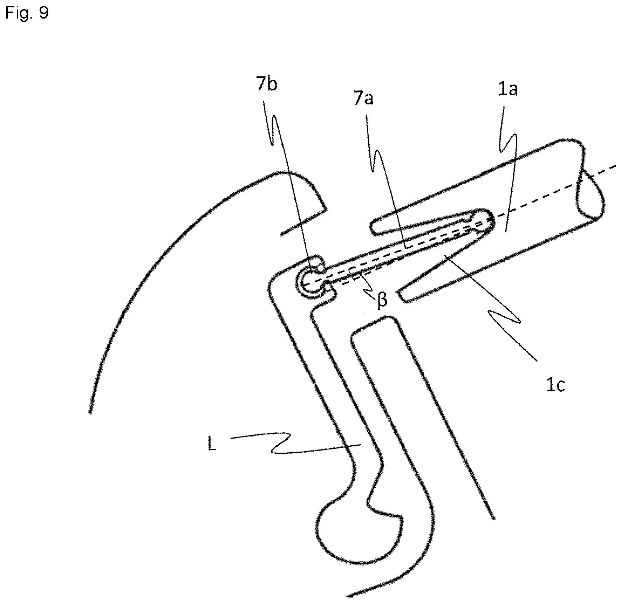

In Fig. 9, a further connection between the piston rod 1a of the park brake actuator and a lever L of a brake caliper C (not shown here) is shown. In this case, only the connection between the piston 1a and the lever L is shown, without the remaining parts of the park brake actuator. Herein, the bore 1c of the piston rod 1a is a tapered bore. The tapered bore 1c of the piston rod 1a guides the push rod 7a, which is connected to the lever L with a ball joint 7b. There is a self-alignment of the push rod 7a by the angled side of the bore 1c during assembly. Herein the displacement angle β is the angle between the center line of the piston 1a and the push rod 7a.

The present invention is not limited to the above described embodiments.

The push rod 7a can have different shapes. Also, the transmission of the forces to the caliper C can be performed via different connection mechanisms 7.

### LIST OF REFERENCE SIGNS

- P: Park brake actuator
- S: Service brake actuator
- PS: Combined actuator
- W: Wheel
- C: Caliper
- L: Lever

- 1: Piston
- 1a: Piston rod
- 1b: Piston head
- 1c: Bore
- 2: Spring
- 3: Housing
- 3a: Housing opening
- 3b: Fluid space
- 4a: First seal
- 4b: Second seal
- 5a: First guiding element
- 5b: Second guiding element
- 6: Membrane
- 7: Connecting element
- 7a: Push rod
- 7b: Ball joint
- 7c: Alignment element
- 7d: Vulcanized rubber
- 7e: Pin connection
- 7f: Magnetic connection
- 8: Bearing
- 9: Rack
- 10: Pinion
- 11: Air passage

## Claims

1. Park brake actuator (P), comprising:
a piston (1) comprising a piston rod (1a) and a piston head (1b), the piston (1) being provided in a housing (3), wherein a spring (2) is arranged between the piston head (1b) and one side of the housing (3),
the housing comprising an opening (3a) in which the piston rod (1a) is movably inserted,
a fluid chamber (3b) being provided between the piston head (1b) and the other side of the housing (3), wherein fluid is insertable into the fluid space (3b),
wherein the piston (1) comprises at least one first guiding element (5a) which is adapted to guide the piston rod (1a) in the opening (3a),
and at least one first seal (4a) is provided between the piston rod (1a) and the opening (3a).

2. Park brake actuator (P) according to claim 1, wherein the at least one first seal (4a) is integrally formed with a respective first guiding element (5a).

3. Park brake actuator (P) according to claim 1 or 2, additionally comprising a membrane (6) being adapted to delimit the fluid chamber (3b) from the spring (2).

4. Park brake actuator (P) according to claim 1 or 2, additionally comprising a second seal (4b) being provided between the piston head (1b) and the housing (3), and/or a second guiding element (5b) provided at the piston head (1b), being adapted to guide the movement of the piston head (1b) in the housing (3), wherein the second seal (4b) and the second guiding element (5b) are optionally integrally formed.

5. Park brake actuator (P) according to one of the previous claims, wherein the first guiding element (5a) and/or the second guiding element (5b) is/are provided as a bushing, preferably a bushing comprising or consisting of polytetrafluoroethylene (PTFE) or a material with similar properties.

6. Park brake actuator (P) according to one of the previous claims, wherein no other actuator is connected to the piston (1).

7. Park brake actuator (P) according to one of the previous claims, further comprising at least one connecting element (7) being adapted to connect the piston rod (1a) with a lever (L), the lever (L) being adapted to actuate a caliper (C).

8. Park brake actuator (P) according to claim 7, wherein the connecting element (7) comprises a push rod (7a), preferably provided within a bore (1c) of the piston rod (1a).

9. Park brake actuator (P) according to one of claims 7 or 8, wherein the piston rod (1a) comprises a bore (1c) with at least one tapered portion at the side opposite to the piston head (1b), wherein a push rod (7a) is arranged in the bore (1c) and is adapted to be connected to a lever (L) of a caliper (C) via a ball joint (7b).

10. Park brake actuator (P) according to claim 9, wherein the maximum displacement angle (β) of the push rod (7a) within the portion of the bore (1c) is between 5° and 20°, preferably between 10° and 15°.

11. Park brake actuator (P) according to claim 7 or 8, wherein the push rod (7a) comprises a ball joint (7b) provided within the bore (1c) of the piston rod (1a), wherein the push rod (7a) is preferably slideably fixed within the bore (1c) by at least one alignment element (7c).

12. Park brake actuator (P) according to claim 11, wherein the alignment element (7c) is a rubber part or alignment spring being adapted for an angular alignment of the push rod (7a).

13. Park brake actuator (P) according to one of the previous claims 7 to 12, further comprising a vulcanized rubber (7d), a pin connection (7e) and/or a magnetic connection (7f), being adapted to connect the push rod (7a) to a lever (L) of a caliper (C).

14. Park brake actuator (P) according to one of claims 1 to 6, further comprising a bearing (8), preferably a roller bearing or a needle bearing, which is adapted to connect the piston rod (1a) to the lever (L) of a caliper (C).

15. Park brake actuator (P) according to one of claims 1 to 6, wherein the piston rod (1a) is adapted to be connected to the lever (L) of a caliper (C) by a rack (9) provided at the piston rod (1a) and a pinion (10) provided at the lever (L).
